# EUROPEAN PATENT APPLICATION

(11) **EP 4 834 976 A1**
(43) Date of publication of application: **04.11.2026**
(21) Application number: 24912605.3
(22) Date of filing: 19.12.2024
(51) Int. Cl.: C08G 77/50, C07F 7/18, C08G 77/38, C08K 5/17, C08L 83/14, C09D 183/14, C09J 183/14

(54) **ORGANOPOLYSILOXANE HAVING REACTIVE SILICON-CONTAINING GROUP, PRODUCTION METHOD THEREFOR, CURABLE COMPOSITION, AND CURED PRODUCT**

(30) Priority: 28.12.2023 JP 2023222160
(71) Applicant: SHIN-ETSU CHEMICAL CO., LTD., Tokyo 100-0005 (JP)
(72) Inventor: TAKAGI Kazunori, Annaka-shi, Gunma 379-0224 (JP); YAMADA Tetsuro, Annaka-shi, Gunma 379-0224 (JP); HIROKAMI Munenao, Annaka-shi, Gunma 379-0224 (JP); YASUDA Shigeki, Annaka-shi, Gunma 379-0224 (JP)
(74) Representative: Mewburn Ellis LLP
(86) International application number: PCT/JP2024/044947
(87) International publication number: WO 2025/142716

(57) **Abstract**

This reactive silicon group-containing organopolysiloxane has, in each molecule, at least one group represented by structural formula (1) bonded to a silicon atom. The reactive silicon group-containing organopolysiloxane has good curability even if an amine-based compound is used as a curing catalyst, and gives a cured product having excellent yellowing resistance and heat resistance. 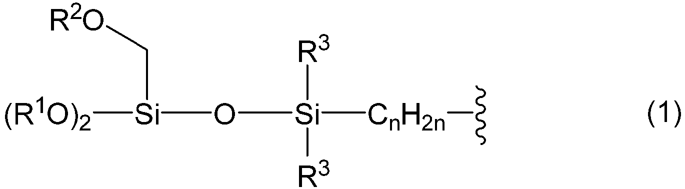 (In the formula, R¹ and R² each independently represent a hydrogen atom, a C1-10 aliphatic saturated hydrocarbon group or a C6-10 aryl group, each R³ independently represents a C1-10 aliphatic saturated hydrocarbon group or a C6-10 aryl group, and n is an integer of 2-12. The wavy line represents a bond.)

## Description

### TECHNICAL FIELD

The present invention relates to an organopolysiloxane having a reactive silicon-containing group, a method for producing the same, a curable composition, and a cured product and, more particularly, to an organopolysiloxane having, as the reactive silicon-containing group, an organosilicon group capable of forming a siloxane bond through reaction, a method for producing the same, a curable composition, and a cured product.

### BACKGROUND ART

Reactive silicon groups, particularly alkoxysilyl groups, are capable of undergoing hydrolytic condensation in the presence of water, and therefore compounds having such reactive silicon groups can be used as curable compositions that undergo crosslinking and curing in the presence of water or moisture.

Among these compounds, a compound having a main chain including a silicon-containing organic group such as a silicone is generally known, for example, as a terminal-reactive silicone. A curable composition using the terminal-reactive silicone is liquid at room temperature and is characterized by its ability to cure into a rubber elastomer. Due to this property, the curable composition is widely used for coating agents, adhesives, and sealants for building applications.

Various types of room temperature-curable, terminal-reactive silicone-containing compositions with different reactive silicon groups are well-known. In particular, some conventional compositions in which the reactive silicon groups are alkoxysilyl groups, i.e., dealcoholization-type compositions that release alcohol during curing, do not have unpleasant odors, are not corrosive to metals, and are therefore preferably used for the applications described above.

A room temperature-curable composition disclosed in Patent Document 1, which includes an alkoxysilyl-terminated silicone oil as a base resin (base polymer), is known as a representative example of the dealcoholization-type composition.

However, the dealcoholization-type room temperature-curable composition in Patent Document 1 is less reactive with moisture in air than conventionally known curable compositions of other types such as the deoximation type, the deacetoxylation type, and the deacetone type, and the curability of the composition is insufficient. Therefore, to ensure sufficient curability at room temperature, it is generally indispensable to add a catalyst such as an organotin-based compound. However, one concern with such organotin-based compounds commonly used as catalysts is their toxicity to humans and the environment.

Moreover, when an organometallic catalyst such as an organotin-based compound is used for the dealcoholization-type room temperature-curable composition, the main chain of the silicone oil is cleaved by the alcohol generated (cracking of the silicone oil occurs). This poses a problem of poor storage stability such as deterioration in curability and an increase in viscosity over time.

Accordingly, to improve the storage stability, Patent Document 2 discloses a room temperature-curable composition including an alkoxysilyl-terminated silicone oil containing silethylene groups serving as linking groups between the alkoxysilyl groups and the main chain of the silicone oil.

However, although the storage stability of the compound in Patent Document 2 is good, its curability is still insufficient. When an amine-based compound is used as the curing catalyst for this compound in order to avoid the use of organotin-based compounds of toxicological concern, its low reactivity leads to the problem of a prolonged curing time.

To improve the reactivity, Patent Document 3 discloses an alkoxysilyl-terminated polymer obtained by reacting, for example, a hydroxy-terminated polymer with isocyanate silane.

Although the reactivity of the compound in Patent Document 3 is high, significant coloration occurs over time because urethane or urea bonds are present in its molecule, and therefore yellowing resistance and heat resistance are insufficient. Other problems include the use of the highly toxic low-boiling point isocyanate silane during the production of the terminated polymer and the potential formation of similar low-boiling point isocyanate silanes due to thermal decomposition of the urethane or urea bonds at high temperature.

Patent Document 4 discloses that, by using a prescribed organopolysiloxane group-containing organosilicon compound having a sulfide-methylene bond as the linking group between an alkoxysilyl group and the organopolysiloxane main chain, a cured product having fast curability, high yellowing resistance, and low toxicity due to the absence of isocyanate silane can be obtained even when an amine-based compound is used as the curing catalyst instead of the organotin compounds.

The reactivity of the compound in Patent Document 4 is high when the amine catalyst is used. However, one problem with this compound is that the cured product is softened due to cleavage of the sulfide-methylene-silicon bonds at high temperature.

### PRIOR ART DOCUMENTS

### PATENT DOCUMENTS

Patent Document 1: JP-A S55-43119
Patent Document 2: JP-B H07-39547
Patent Document 3: JP-A 2004-518801
Patent Document 4: JP-A 2017-203025

### SUMMARY OF INVENTION

### TECHNICAL PROBLEM

The present invention has been made in view of the foregoing circumstances, and it is an object of the invention to provide a reactive silicon group-containing organopolysiloxane that exhibits good curability even when an amine-based compound is used as a curing catalyst and that forms a cured product having high yellowing resistance and high heat resistance and to provide a method for producing the organopolysiloxane.

### SOLUTION TO PROBLEM

The present inventors have conducted extensive studies to solve the foregoing problems and found that an organopolysiloxane having, as a reactive silicon group, a silyl group to which an organoxymethyl group and two organoxy groups are bonded exhibits good curability even when an amine-based compound is used as a curing catalyst and can form a cured product having high yellowing resistance and high heat resistance, and thus the invention has been completed.

Accordingly, the present invention provides the following.
1. A reactive silicon group-containing organopolysiloxane having, per molecule, at least one group represented by the following structural formula (1), the group being bonded to a silicon atom: 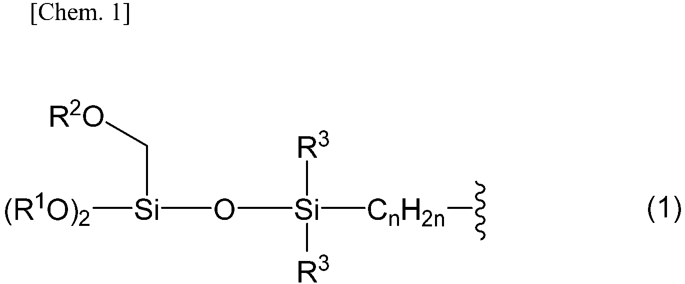 (wherein R¹ and R² each independently represent a hydrogen atom, a saturated aliphatic hydrocarbon group having 1 to 10 carbon atoms, or an aryl group having 6 to 10 carbon atoms; each R³ independently represents a saturated aliphatic hydrocarbon group having 1 to 10 carbon atoms or an aryl group having 6 to 10 carbon atoms; n is an integer from 2 to 12; and the wavy line represents a bonding site).
2. The reactive silicon group-containing organopolysiloxane according to 1, wherein the reactive silicon group-containing organopolysiloxane is represented by the following formula (2): 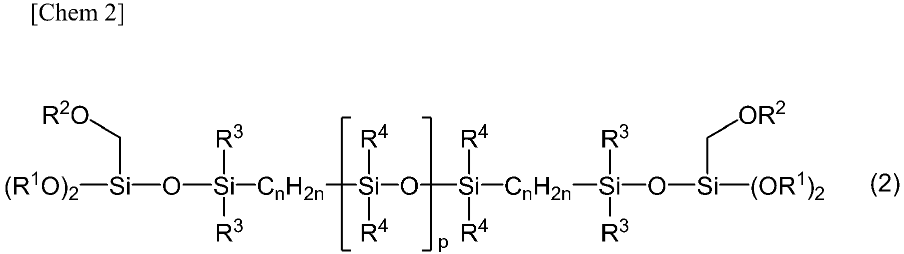 (wherein R¹, R², R³ and n have the same meanings as defined above; each R⁴ independently represents a saturated aliphatic hydrocarbon group having 1 to 10 carbon atoms or an aryl group having 6 to 10 carbon atoms; and p is an integer from 1 to 2,000).
3. A disiloxane compound represented by the following formula (3): 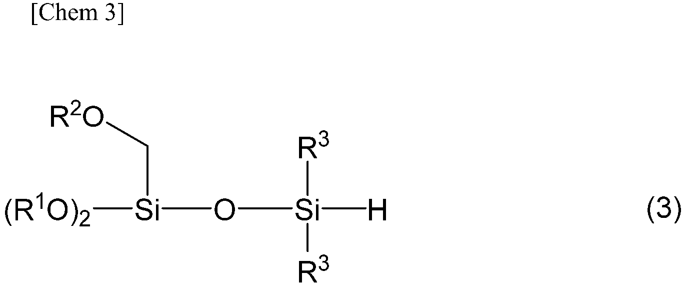 (wherein R¹ and R² each independently represent a hydrogen atom, a saturated aliphatic hydrocarbon group having 1 to 10 carbon atoms, or an aryl group having 6 to 10 carbon atoms, and each R³ independently represents a saturated aliphatic hydrocarbon group having 1 to 10 carbon atoms or an aryl group having 6 to 10 carbon atoms).
4. A method for producing the reactive silicon group-containing organopolysiloxane according to 1, the method including subjecting an organopolysiloxane including an alkenyl group bonded to a silicon atom and a disiloxane compound represented by the following formula (3) to a hydrosilylation reaction: 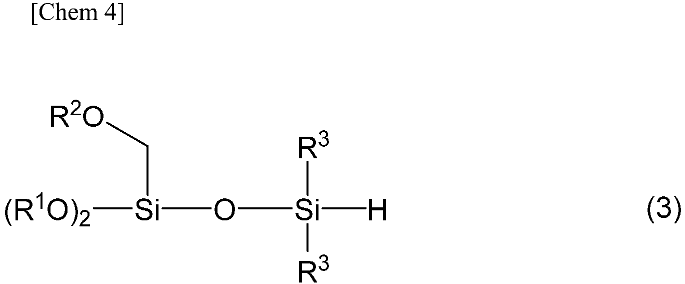 (wherein R¹, R², and R³ have the same meanings as defined above).
5. The method for producing the reactive silicon group-containing organopolysiloxane according to 4, wherein the organopolysiloxane including an alkenyl group bonded to a silicon atom is represented by the following formula (4): 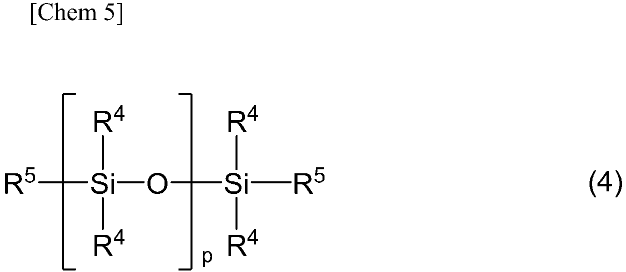 (wherein each R⁴ independently represents a saturated aliphatic hydrocarbon group having 1 to 10 carbon atoms or an aryl group having 6 to 10 carbon atoms; each R⁵ represents an alkenyl group having 2 to 12 carbon atoms; and p is an integer from 1 to 2000).
6. A curable composition including: (A) the reactive silicon group-containing organopolysiloxane according to 1; and (B) a curing catalyst.
7. The curable composition according to 6, wherein the curing catalyst (B) is an amine-based compound.
8. A cured product obtained by curing the curable composition according to 6 or 7.
9. A coating agent composition including: (A) the reactive silicon group-containing organopolysiloxane according to 1; and (B) a curing catalyst.
10. The coating agent composition according to 9, wherein the curing catalyst (B) is an amine-based compound.
11. An article including a coating layer formed by curing the coating agent composition according to 9 or 10.
12. An adhesive composition including: (A) the reactive silicon group-containing organopolysiloxane according to 1; and (B) a curing catalyst.
13. The adhesive composition according to 12, wherein the curing catalyst (B) is an amine-based compound.
14. An article including a bonding layer formed by curing the adhesive composition according to 12 or 13.

### ADVANTAGEOUS EFFECTS OF INVENTION

The reactive silicon group-containing organopolysiloxane of the invention has, at a molecular end, a specific reactive silicon group, i.e., a silyl group to which an organoxymethyl group and two organoxy groups are bonded. Therefore, even when an amine-based compound is used instead of an organotin compound as a curing catalyst, the organopolysiloxane exhibits good curability and forms a cured product having high yellowing resistance and high heat resistance.

The reactive silicon group-containing organopolysiloxane of the invention having these characteristics can be preferably used as a base resin (base polymer) for coating agents, adhesives, sealants, etc.

### DESCRIPTION OF EMBODIMENTS

The present invention will next be described more specifically.

The reactive silicon group-containing organopolysiloxane of the invention is an organopolysiloxane having, per molecule, at least one group represented by the following structural formula (1), the group being bonded to a silicon atom.

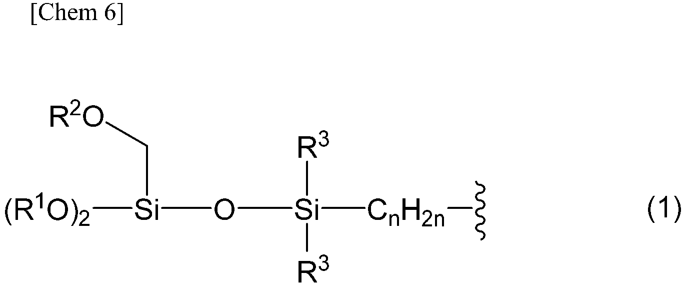

In formula (1), R¹ and R² each independently represent a hydrogen atom, a saturated aliphatic hydrocarbon group having 1 to 10 carbon atoms, or an aryl group having 6 to 10 carbon atoms, and each R³ independently represents a saturated aliphatic hydrocarbon group having 1 to 10 carbon atoms or an aryl group having 6 to 10 carbon atoms.

The saturated aliphatic hydrocarbon group having 1 to 10 carbon atoms represented by each of R¹, R², and R³ may be linear, cyclic, or branched, and specific examples thereof include: linear and branched alkyl groups such as methyl, ethyl, n-propyl, i-propyl, n-butyl, s-butyl, t-butyl, n-pentyl, neopentyl, n-hexyl, n-heptyl, n-octyl, n-nonyl, and n-decyl groups; and cycloalkyl groups such as cyclopropyl, cyclobutyl, cyclopentyl, cyclohexyl, cycloheptyl, and cyclooctyl groups.

Specific examples of the aryl group having 6 to 10 carbon atoms represented by each of R¹, R², and R³ include phenyl, tolyl, xylyl, α-naphthyl, and β-naphthyl groups.

Some or all of the hydrogen atoms in any of these groups may each be substituted with a halogen atom such as F, Cl, or Br or a cyano group, and specific examples of the substituted groups include a 3-chloropropyl group, a 3,3,3-trifluoropropyl group, and a 2-cyanoethyl group.

In particular, R¹, R², and R³ are each preferably a methyl group, an ethyl group, or a phenyl group and are each more preferably a methyl group in terms of curability, productivity, and cost.

In formula (1), n is an integer from 2 to 12. In terms of reactivity, n is preferably 2 to 8, more preferably 2 to 3, and still more preferably 2.

No particular limitation is imposed on the siloxane structural units (M, D, T, and Q units) of the reactive silicon group-containing organopolysiloxane of the invention, and the siloxane skeleton may include a linear chain structure, a branched structure, a cyclic structure, or a crosslinked structure. However, from the viewpoint of mechanical properties of a cured product to be obtained and the storage stability of the composition, it is preferable that the siloxane skeleton has a linear chain structure.

In the reactive silicon group-containing organopolysiloxane of the invention, the number of reactive silicon-containing groups represented by structural formula (1) per molecule is one or more. From the viewpoint of the curability and storage stability of the composition and the mechanical properties of the cured product, the number of reactive silicon-containing groups is preferably 2 to 4 and more preferably 2 (for example, one at each of the opposite molecular chain ends of the linear organopolysiloxane).

Therefore, the reactive silicon group-containing organopolysiloxane of the invention is preferably an organopolysiloxane represented by formula (2) shown below. By using such a compound, the mechanical properties of the cured product to be obtained and the storage stability of the composition are further improved: 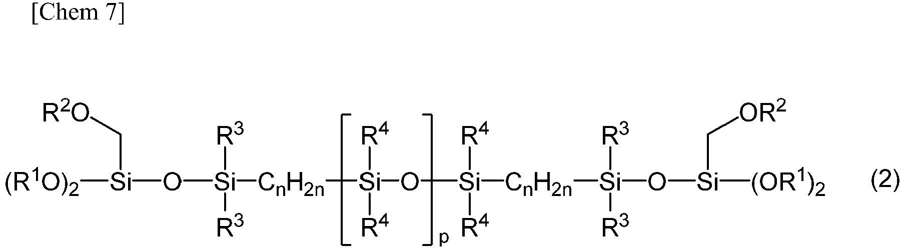 (wherein R¹, R², R³, and n have the same meanings as defined above).

In formula (2), each R⁴ independently represents a saturated aliphatic hydrocarbon group having 1 to 10 carbon atoms or an aryl group having 6 to 10 carbon atoms.

Examples of the saturated aliphatic hydrocarbon group having 1 to 10 carbon atoms and the aryl group having 6 to 10 carbon atoms represented by R⁴ include the same groups as those exemplified for R¹, R², and R³. In particular, a methyl group, an ethyl group, and a phenyl group are preferred, and a methyl group is more preferred in terms of the yellowing resistance of the cured product.

In formula (2), p is a number from 1 to 2,000. From the viewpoint of the mechanical properties of a cured product to be obtained and the workability of the composition, p is preferably 10 to 1,500 and more preferably 100 to 1,000.

No particular limitation is imposed on the number average molecular weight of the reactive silicon group-containing organopolysiloxane of the invention. To adjust the viscosity etc. of a curable composition containing the compound within appropriate ranges to thereby improve the workability of the curable composition and impart sufficient curability thereto, the number average molecular weight is preferably 200 to 100,000, more preferably 500 to 50,000, and still more preferably 1,000 to 20,000.

The number average molecular weight in the invention is a polystyrene-equivalent value determined by gel permeation chromatography (GPC) analysis (the same applies to the following).

No particular limitation is imposed on the viscosity of the reactive silicon group-containing organopolysiloxane of the invention. To adjust the viscosity etc. of the curable composition containing the compound within appropriate ranges to thereby improve the workability of the curable composition and impart sufficient curability thereto, the viscosity is preferably 2 to 100,000 mPa·s, more preferably 5 to 50,000 mPa·s, and particularly preferably 10 to 20,000 mPa·s. The viscosity is a value measured at 25°C using a B-type rotational viscometer.

The reactive silicon group-containing organopolysiloxane of the invention can be obtained by subjecting an organopolysiloxane containing an alkenyl group bonded to a silicon atom (which is hereinafter referred to also as an "alkenyl group-containing organopolysiloxane") and a disiloxane compound represented by the following formula (3) to a hydrosilylation reaction in the presence of a platinum group metal catalyst in air or in an inert gas such as nitrogen: 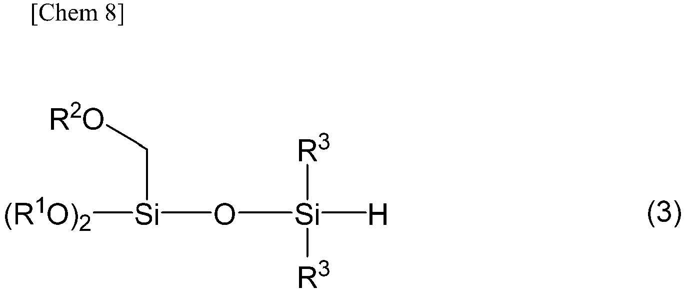 (wherein R¹, R², and R³ have the same meanings as defined above).

Specific examples of the disiloxane compound represented by formula (3) above include, but are not limited to, compounds represented by the following structural formulas. In particular, a disiloxane compound represented by formula (5) is preferred.

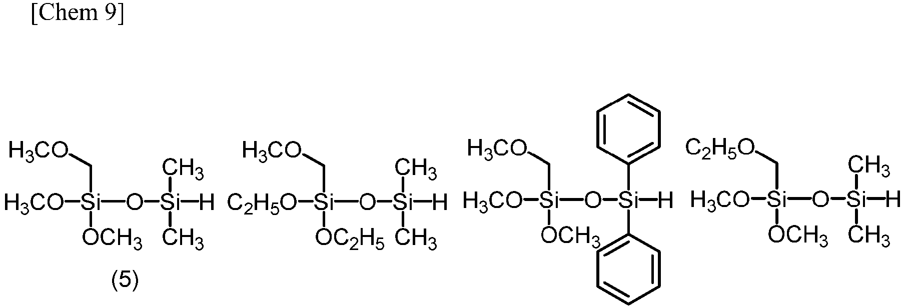

The disiloxane compound represented by formula (3) above is obtained, for example, by subjecting an organoxysilane represented by the following formula (6) and a disiloxane compound represented by the following formula (7) to an equilibration reaction in the presence of an acid and water: 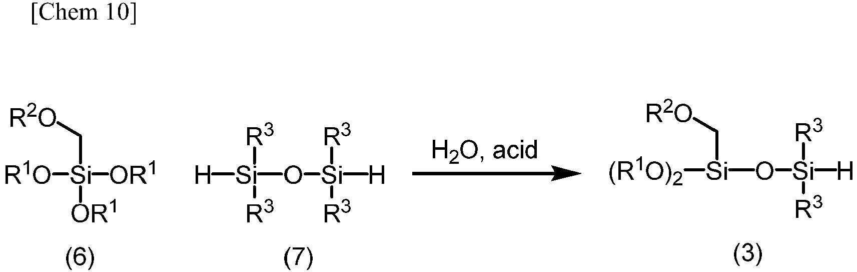 (wherein R¹, R², and R³ have the same meanings as defined above).

No particular limitation is imposed on the siloxane structural unit in the alkenyl group-containing organopolysiloxane, and the siloxane skeleton may include a linear chain structure, a branched structure, a cyclic structure, or a crosslinked structure.

Specific examples of the alkenyl group-containing organopolysiloxane include 1,1-divinyltetramethyldisiloxane, 1,1,1-trivinyltrimethyldisiloxane, 1,3-divinyltetramethyldisiloxane, 1,3-divinyltetraphenyldisiloxane, 1,3-diallyltetramethyldisiloxane, 1,1,3,3-tetravinyldimethyldisiloxane, hexavinyldisiloxane, 1,3,5,7-tetravinyltetramethylcyclotetrasiloxane, α,ω-divinyl-terminated dimethylpolysiloxane, α,ω-divinyl-terminated diphenylpolysiloxane, an α,ω-divinyl-terminated dimethylpolysiloxane/diphenylpolysiloxane copolymer, a vinyl-terminated methylsilicone resin, a vinyl-terminated phenylsilicone resin, and a vinyl-terminated methyl/phenylsilicone resin. From the viewpoint of the mechanical properties of a cured product to be obtained and the storage stability of the composition, alkenyl group-containing organopolysiloxanes having a linear chain structure are preferred.

The alkenyl group is preferably a linear or branched alkenyl group having preferably 2 to 12 carbon atoms and more preferably 2 to 8 carbon atoms. Specific examples thereof include vinyl, 1-propenyl, allyl, isopropenyl, 1-butenyl, 2-butenyl, 3-butenyl, 1-methyl-2-propenyl, 2-methyl-1-propenyl, 1-pentenyl, 2-pentenyl, 3-pentenyl, 4-pentenyl, 1-methyl-3-butenyl, 2-methyl-3-butenyl, 3-methyl-3-butenyl, 1,1-dimethyl-2-propenyl, 1,2-dimethyl-2-propenyl, 3-methyl-2-butenyl, 2-methyl-2-butenyl, 1-ethyl-2-propenyl, 2-ethyl-2-propenyl, 1-methyl-4-pentenyl, 1-hexenyl, 2-hexenyl, 3-hexenyl, 4-hexenyl, 5-hexenyl, 1-heptenyl, 2-heptenyl, 3-heptenyl, 4-heptenyl, 5-heptenyl, 6-heptenyl, 1-methyl-6-heptenyl, 1-octenyl, 2-octenyl, 3-octenyl, 4-octenyl, 5-octenyl, 6-octenyl, and 7-octenyl groups. Of these, a vinyl group or an allyl group is preferred, and a vinyl group is more preferred.

In the alkenyl group-containing organopolysiloxane, the number of alkenyl groups per molecule is one or more. From the viewpoint of the curability and storage stability of the composition and the mechanical properties of the cured product, the number of alkenyl groups is preferably 2 to 4 and more preferably 2 (for example, one at each of the opposite molecular chain ends of the linear organopolysiloxane).

Therefore, the alkenyl group-containing organopolysiloxane is preferably an organopolysiloxane represented by the following formula (4), and using this alkenyl group-containing organopolysiloxane further improves the mechanical properties of a cured product to be obtained and the storage stability of the composition: 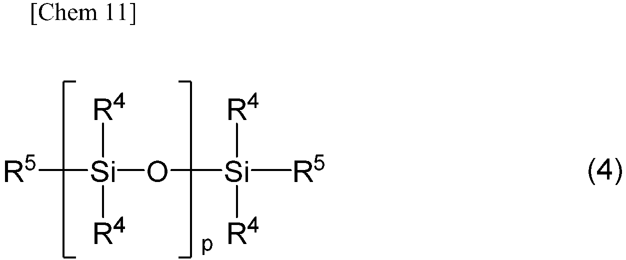 (wherein R⁴ and p have the same meanings as defined above).

In formula (4), each R⁵ represents an alkenyl group having 2 to 12 carbon atoms.

The alkenyl group having 2 to 12 carbon atoms and represented by R⁵ is preferably any of the above-exemplified linear and branched alkenyl groups having 2 to 8 carbon atoms, more preferably a vinyl group or an allyl group, and still more preferably a vinyl group.

To reduce the formation of byproducts during the hydrosilylation reaction and to ensure the storage stability of the composition and the mechanical properties of the cured product, the reaction ratio of the alkenyl group-containing organopolysiloxane to the disiloxane compound represented by formula (3) above is adjusted such that the number of hydrosilyl groups in the disiloxane compound represented by formula (3) is preferably 0.8 to 2.5 and more preferably 0.9 to 2.0 per alkenyl group in the alkenyl group-containing organopolysiloxane.

No particular limitation is imposed on the platinum group metal catalyst used for the hydrosilylation reaction. Specific examples thereof include chloroplatinic acid, an alcohol solution of chloroplatinic acid, a toluene or xylene solution of a platinum-1,3-divinyl-1,1,3,3-tetramethyldisiloxane complex, tetrakis(triphenylphosphine)platinum, dichlorobis(triphenylphosphine)platinum, dichlorobis(acetonitrile)platinum, dichlorobis(benzonitrile)platinum, dichloro(cyclooctadiene)platinum, and supported catalysts such as platinum-carbon, platinum-alumina, and platinum-silica.

Of these, platinum(0) complexes are preferred from the viewpoint of selectivity during hydrosilylation, and a toluene or xylene solution of a platinum-1,3-divinyl-1,1,3,3-tetramethyldisiloxane complex is more preferred.

No particular limitation is imposed on the amount of the platinum group metal catalyst used. The weight ratio of the platinum group metal to the total weight of the alkenyl group-containing organopolysiloxane and the disiloxane compound represented by formula (3) above is preferably 0.1 to 1,000 ppm and more preferably 0.3 to 100 ppm from the viewpoint of reactivity, productivity, etc.

The hydrosilylation reaction may be performed under solvent-free conditions. However, a solvent may optionally be used so long as it does not impair the reaction.

Specific examples of the solvent that can be used include: hydrocarbon-based solvents such as pentane, hexane, cyclohexane, heptane, isooctane, benzene, toluene, and xylene; ether-based solvents such as diethyl ether, tetrahydrofuran, and dioxane; ester-based solvents such as ethyl acetate and butyl acetate; aprotic polar solvents such as N,N-dimethylformamide; and chlorinated hydrocarbon-based solvents such as dichloromethane and chloroform. One of these solvents may be used alone, or a mixture of two or more may be used.

No particular limitation is imposed on the reaction temperature of the hydrosilylation reaction. The reaction temperature is preferably 0 to 200°C, more preferably 40 to 110°C, and still more preferably 60 to 100°C. When a solvent is used, it is preferable to perform the reaction within the range of 0°C to the boiling point of the solvent.

No particular limitation is imposed on the reaction time. The reaction time is generally 1 to 60 hours and preferably 1 to 24 hours.

The curable composition of the invention (hereinafter referred to as the composition) contains at least the reactive silicon group-containing organopolysiloxane (A) described above and a curing catalyst (B).

Since the composition of the invention contains the reactive silicon group-containing organopolysiloxane of the invention, the composition exhibits good curability and forms a cured product having yellowing resistance and heat resistance.

The curing catalyst (B) is a component that promotes the hydrolytic condensation reaction of the hydrolyzable groups contained in the reactive silicon group-containing organopolysiloxane (A) with moisture in air to thereby facilitate the curing of the composition and is added to ensure efficient curing of the composition.

No particular limitation is imposed on the curing catalyst so long as it is a curing catalyst used to cure general moisture condensation curable compositions. Specific examples thereof include: alkyl tin compounds such as dibutyltin oxide and dioctyltin oxide; alkyltin ester compounds such as dibutyltin diacetate, dibutyltin dilaurate, dioctyltin dilaurate, dibutyltin dioctoate, dioctyltin dioctoate, and dioctyltin diversatate; titanates, titanium chelate compounds, and partial hydrolysates thereof such as tetraisopropoxytitanium, tetra-n-butoxytitanium, tetrakis(2-ethylhexoxy)titanium, dipropoxybis(acetylacetonato)titanium, titanium diisopropoxy bis(ethylacetoacetate), and titanium isopropoxyoctylene glycol; organometallic compounds such as zinc naphthenate, zinc stearate, zinc-2-ethyloctoate, iron-2-ethylhexoate, cobalt-2-ethylhexoate, manganese-2-ethylhexoate, cobalt naphthenate, aluminum trihydroxide, aluminum alcoholates, aluminum acylates, salts of aluminum acylates, aluminosiloxy compounds, and aluminum chelate compounds; aminoalkyl-substituted alkoxysilanes such as 3-aminopropyltrimethoxysilane, 3-aminopropyltriethoxysilane, 3-aminopropylmethyldimethoxysilane, 3-aminopropylmethyldiethoxysilane, N-β(aminoethyl)γ-aminopropyltrimethoxysilane, N-β(aminoethyl)γ-aminopropyltriethoxysilane, N-β(aminoethyl)γ-aminopropylmethyldimethoxysilane, N-β(aminoethyl)γ-aminopropylmethyldiethoxysilane, bis[3-(trimethoxysilyl)propyl]amine, bis[3-(triethoxysilyl)propyl]amine, N,N'-bis[3-(trimethoxysilyl)propyl]ethane-1,2-diamine, N,N'-bis[3-(triethoxysilyl)propyl]ethane-1,2-diamine, and N-phenyl-3-aminopropyltrimethoxysilane; amine compounds and salts thereof such as hexylamine and dodecylamine phosphate; quaternary ammonium salts such as benzyltriethylammonium acetate; lower fatty acid salts of alkali metals such as potassium acetate, sodium acetate, and lithium oxalate; dialkylhydroxylamines such as dimethylhydroxylamine and diethylhydroxylamine; guanidino group-containing silanes and siloxanes such as 2-[3-(trimethoxysilyl)propyl]-1,1,3,3-tetramethylguanidine, 2-[3-(methyldimethoxysilyl)propyl]-1,1,3,3-tetramethylguanidine, 2-[3-(triethoxysilyl)propyl]-1,1,3,3-tetramethylguanidine, 2-[3-(methyldiethoxysilyl)propyl]-1,1,3,3-tetramethylguanidine, and 2-[3-(tris(trimethylsiloxy)silyl)propyl]-1,1,3,3-tetramethylguanidine; and phosphazene base-containing silanes and siloxanes such as N,N,N',N',N",N"-hexamethyl-N'"-[3-(trimethoxysilyl)propyl]-phosphorimidic triamide. Any one of these may be used alone, or two or more may be used in combination.

Of these, dioctyltin dilaurate, dioctyltin diversatate, tetraisopropoxytitanium, tetra-n-butoxytitanium, titanium diisopropoxy bis(ethylacetoacetate), 3-aminopropyltrimethoxysilane, N-β(aminoethyl)γ-aminopropyltrimethoxysilane, bis[3-(trimethoxysilyl)propyl]amine, N,N'-bis[3-(trimethoxysilyl)propyl]ethane-1,2-diamine, and 2-[3-(trimethoxysilyl)propyl]-1,1,3,3-tetramethylguanidine are preferred because of their higher reactivity, and dioctyltin dilaurate, dioctyltin diversatate, 3-aminopropyltrimethoxysilane, and 2-[3-(trimethoxysilyl)propyl]-1,1,3,3-tetramethylguanidine are more preferred from the viewpoint of the curability of the composition. To avoid the use of an organotin-based compound to thereby further reduce toxicity, 3-aminopropyltrimethoxysilane and 2-[3-(trimethoxysilyl)propyl]-1,1,3,3-tetramethylguanidine are still more preferred, and 2-[3-(trimethoxysilyl)propyl]-1,1,3,3-tetramethylguanidine is particularly preferred from the viewpoint of the curability of the composition.

No particular limitation is imposed on the amount of the curing catalyst added. To adjust the curing speed within an appropriate range to thereby improve the workability, the amount of the curing catalyst added is preferably 0.01 to 15 parts by weight and more preferably 0.1 to 5 parts by weight based on 100 parts by weight of the reactive silicon group-containing organopolysiloxane (A).

For the purpose of adjusting the viscosity of the composition of the invention to improve workability and for the purpose of adjusting the curability of the composition, the hardness, flexibility, etc. of a coating to be obtained, one or two or more compounds selected from alkoxysilyl group-containing silane compounds, silicone alkoxy oligomers having an alkoxysilyl group and/or a silanol group per molecule, and silicone resins other than the reactive silicon group-containing organopolysiloxane used as component (A) may optionally be added according to the intended purpose.

No particular limitation is imposed on the alkoxysilyl group-containing silane compound. Specific examples thereof include: tetraalkoxysilanes such as tetramethoxysilane, tetraethoxysilane, tetrapropoxysilane, tetraisopropoxysilane, tetrabutoxysilane, and tetraoctoxysilane;
trialkoxysilanes such as methyltrimethoxysilane, methyltriethoxysilane, phenyltrimethoxysilane, 3-glycidoxypropyltrimethoxysilane, 3-glycidoxypropyltriethoxysilane, 3-methacryloxypropyltrimethoxysilane, 3-acryloxypropyltrimethoxysilane, 3-mercaptopropyltrimethoxysilane, 3-mercaptopropyltriethoxysilane, nonafluorohexyltrimethoxysilane, tridecafluorooctyltrimethoxysilane, and polyethylene glycol methyl-3-trimethoxysilylpropyl ether;
dialkoxysilanes such as dimethyldimethoxysilane, dimethyldiethoxysilane, diphenyldimethoxysilane, 3-glycidoxypropylmethyldimethoxysilane, and 3-glycidoxypropylmethyldiethoxysilane; and
monoalkoxysilanes such as trimethylmethoxysilane, trimethylethoxysilane, vinyldimethylmethoxysilane, 3-methacryloxypropyldimethylmethoxysilane, 3-methacryloxypropyldimethylethoxysilane, 3-acryloxypropyldimethylmethoxysilane, 3-acryloxypropyldimethylethoxysilane, N-2-(aminoethyl)-3-aminopropyldimethylmethoxysilane, and N-2-(aminoethyl)-3-aminopropyldimethylethoxysilane.

No particular limitation is imposed on the silicone alkoxy oligomer having an alkoxysilyl group and/or a silanol group per molecule, and a commercially available oligomer may be used. Specific examples thereof include X-40-9250, X-40-9246, X-40-9225, KR-500, KR-515, KC-89S, KR-401N, X-40-9227, KR-510, KR-9218, KR-400, X-40-2327, and KR-401 manufactured by Shin-Etsu Chemical Co., Ltd.

No particular limitation is imposed on the silicone resin, and a commercially available silicone resin may be used. Specific examples thereof include KR-220L, KR-251, KR-112, KR-300, KR-311, KR-480, and KR-216 manufactured by Shin-Etsu Chemical Co., Ltd.

Preferably, the composition of the invention is a solvent-free composition containing substantially no organic solvent (most organic solvents are harmful to humans and flammable). However, a solvent may be added to the composition used, depending on the intended application and the required workability. The term "substantially" means that the amount of the solvent contained in the composition is 1% by weight or less and particularly 0.1% by weight or less.

No particular limitation is imposed on the solvent so long as it can dissolve the component (A). Specific examples thereof include: hydrocarbon-based solvents such as pentane, hexane, heptane, octane, decane, and cyclohexane; aromatic-based solvents such as benzene, toluene, and xylene; amide-based solvents such as formamide, N,N-dimethylformamide, pyrrolidone, and N-methylpyrrolidone; ester-based solvents such as ethyl acetate, butyl acetate, γ-butyrolactone, and propylene glycol-1-monomethyl ether-2-acetate; ketone-based solvents such as acetone, methyl ethyl ketone, and methyl isobutyl ketone; and ether-based solvents such as diethyl ether, dibutyl ether, cyclopentyl methyl ether, tetrahydrofuran, and 1,4-dioxane. One of these may be used alone, or two or more may be used in combination.

Of these, aromatic-based solvents such as toluene and xylene are preferred from the viewpoint of their dissolution ability, volatility, etc.

Various additives such as an adhesion improver, inorganic and organic ultraviolet absorbers, a storage stability improver, a plasticizer, a filler, a pigment, and a perfume may be added to the composition of the invention according to the intended purpose.

By applying the composition of the invention described above to the surface of a solid base and curing the composition to form a coating layer, a coated solid base is obtained. By applying the adhesive composition of the invention to the surface of a solid base, stacking another solid base onto the applied composition, and curing the composition to form a bonding layer, a bonded layered body is obtained.

No particular limitation is imposed on the method for applying the composition. Specific examples of the method include well-known methods such as spray coating, spin coating, dip coating, roller coating, brush coating, bar coating, and flow coating, and any of them may be appropriately selected and used.

No particular limitation is imposed on the material and shape of the solid base. Specific examples of the solid base include: organic resin bases formed of epoxy resins, phenolic resins, polyimide resins, polycarbonate resins such as polycarbonates and polycarbonate blends, acrylic-based resins such as poly(methyl methacrylate), polyester resins such as poly(ethylene terephthalate), poly(butylene terephthalate), and unsaturated polyester resins, polyamide resins, acrylonitrile-styrene copolymer resins, styrene-acrylonitrile-butadiene copolymer resins, polyvinyl chloride resins, polystyrene resins, blends of polystyrene and polyphenylene ether, cellulose acetate butyrate, and polyethylene resins; metal bases such as iron sheets, copper sheets, and steel sheets; paint-coated surfaces; glass; ceramics; concrete; slate boards; textiles; inorganic fillers such as wood materials, stone materials, tiles, (hollow) silica, titania, zirconia, and alumina; and glass fiber products such as glass fibers, glass clothes, glass tapes, glass mats, and glass paper.

When the composition of the invention comes into contact with moisture in the atmosphere, a hydrolytic condensation reaction of the reactive silicon group-containing organopolysiloxane (A) proceeds. The indicator of the moisture in the atmosphere is humidity, and the humidity may be any value within the range of 10 to 100%RH. Generally, the higher the humidity, the faster the hydrolysis proceeds. Therefore, moisture may be optionally added to the atmosphere.

The curing reaction temperature and time can be appropriately changed according to various factors such as the base used, the moisture concentration, the catalyst concentration, and the type of hydrolysable group. Generally, the curing reaction temperature is preferably about 10°C to about 40°C from the viewpoint of workability etc. To facilitate the curing reaction, the composition may be cured under heating to a temperature lower than the heatproof temperature of the base used. The curing reaction time is generally about 1 minute to about 1 week from the viewpoint of workability etc.

### EXAMPLES

The present invention will next be more specifically described by way of Examples and Comparative Examples. However, the invention is not limited to these Examples.

In the following description, the viscosity is a value measured at 25°C using a B-type rotational viscometer, and the molecular weight and the degree of polymerization are a polystyrene-equivalent number average molecular weight and a number average polymerization degree determined by GPC (gel permeation chromatography) measurement.

### [1] Synthesis of disiloxane compounds

### [Example 1-1] Synthesis of disiloxane compound a

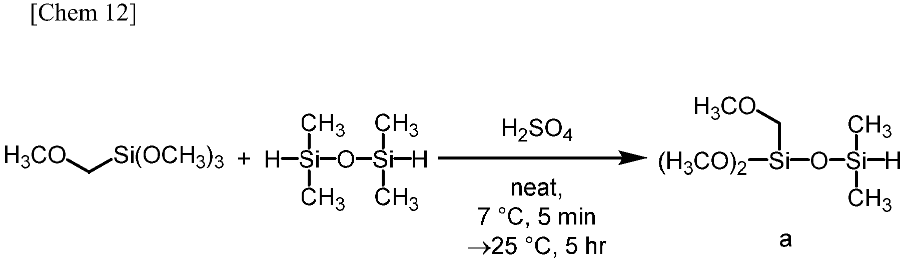

A 300 mL separable flask equipped with a stirrer, a reflux condenser, and a thermometer was charged with 200 g of trimethoxy(methoxymethyl)silane and 40.4 g of 1,1,3,3-tetramethyldisiloxane, and 1.2 g of concentrated sulfuric acid (98% by weight) was added dropwise at 7°C with stirring. After completion of the dropwise addition, the mixture was stirred at 25°C for 5 hours. Then, 6 g of KYOWAAD (registered trademark) 500SH (manufactured by Kyowa Chemical Industry Co., Ltd.) was added, and the resulting mixture was stirred for 1 hour. Then, the mixture was filtered to collect the reaction solution, and the reaction solution was distilled (distillation temperature: 90°C, the degree of vacuum: 17 kPa) to thereby obtain a disiloxane compound a.
¹H-NMR (CDCl₃): δ 4.46 to 4.61 ppm (s, 1H, -SiH), 3.41 to 3.34 ppm (s, 9H, -Si(OCH₃)₂, -OCH₃), 3.15 to 3.13 ppm (s, 2H, -CH₂-), 0.00 to 0.02 ppm (s, 6H, -SiCH₃)

### [Example 1-2] Synthesis of disiloxane compound b

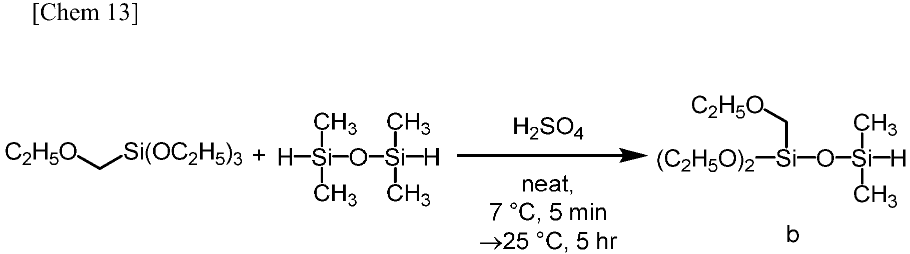

A 300 mL separable flask equipped with a stirrer, a reflux condenser, and a thermometer was charged with 268 g of triethoxy(ethoxymethyl)silane and 40.4 g of 1,1,3,3-tetramethyldisiloxane, and then 1.2 g of concentrated sulfuric acid (98% by weight) was added dropwise at 7°C with stirring. After completion of the dropwise addition, the mixture was stirred at 25°C for 5 hours. Then, 6 g of KYOWAAD (registered trademark) 500SH (manufactured by Kyowa Chemical Industry Co., Ltd.) was added, and the resulting mixture was stirred for 1 hour. Then, the mixture was filtered to collect the reaction solution, and the reaction solution was distilled (distillation temperature: 90°C, the degree of vacuum: 17 kPa) to thereby obtain a disiloxane compound b.
¹H-NMR (CDCl₃): δ 4.46 to 4.61 ppm (s, 1H, -SiH), 3.85 to 3.63 ppm (m, 6H, -OCH₂-), 1.41 to 1.34 ppm (m, 9H, -CH₃), 0.00 to 0.02 ppm (s, 6H, -SiCH₃)

### [Example 1-3] Synthesis of disiloxane compound c

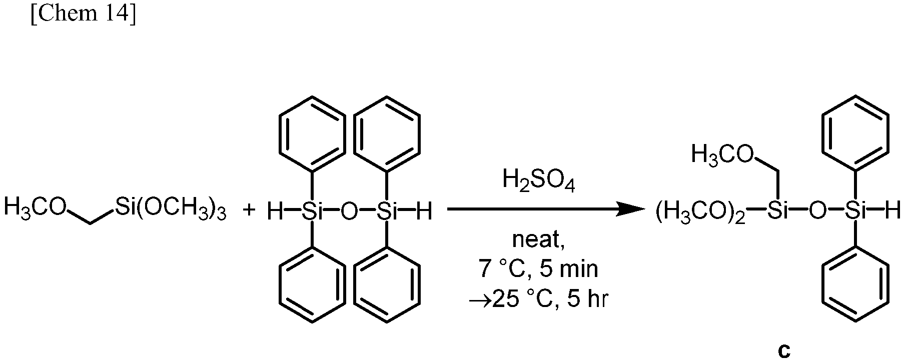

A 300 mL separable flask equipped with a stirrer, a reflux condenser, and a thermometer was charged with 200 g of trimethoxy(methoxymethyl)silane and 115 g of 1,1,3,3-tetraphenyldisiloxane, and 1.2 g of concentrated sulfuric acid (98% by weight) was added dropwise at 7°C with stirring. After completion of the dropwise addition, the mixture was stirred at 25°C for 5 hours. Then, 6 g of KYOWAAD (registered trademark) 500SH (manufactured by Kyowa Chemical Industry Co., Ltd.) was added, and the resulting mixture was stirred for 1 hour. Then, the mixture was filtered to collect the reaction solution, and the reaction solution was distilled (distillation temperature: 90°C, the degree of vacuum: 17 kPa) to thereby obtain a disiloxane compound c.
¹H-NMR (CDCl₃): δ 7.58 to 7.32 ppm (m, 10H, -SiC₆H₅), 4.46 to 4.61 ppm (s, 1H, -SiH), 3.41 to 3.34 ppm (s, 9H, -Si(OCH₃)₂, -OCH₃), 3.15 to 3.13 ppm (s, 2H, -CH₂-)

### [2] Synthesis of reactive silicon group-containing organopolysiloxanes

### [Example 2-1] Synthesis of reactive silicon group-containing organopolysiloxane A-1

A 200 mL separable flask equipped with a stirrer, a reflux condenser, and a thermometer was charged with 100 g of α,ω-divinyldimethylsiloxy-terminated dimethylpolysiloxane having a number average molecular weight of 13,600 (corresponding to 0.015 moles in terms of vinyl groups) and a toluene solution of a platinum-1,3-divinyl-1,1,3,3-tetramethyldisiloxane complex (in an amount of 50 ppm in terms of platinum), and the mixture was heated to 60°C. Then, 7.36 g of the disiloxane compound a (corresponding to 0.030 moles in terms of hydrosilyl groups) was added to the mixture, and the resulting mixture was stirred at 60°C for 2 hours. The reaction was judged complete when the peaks corresponding to the vinyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing organopolysiloxane A-1.

The obtained reactive silicon group-containing organopolysiloxane A-1 was a colorless transparent liquid having a number average molecular weight of 15,000 and a viscosity of 610 mPa·s.

### [Example 2-2] Synthesis of reactive silicon group-containing organopolysiloxane A-2

A 200 mL separable flask equipped with a stirrer, a reflux condenser, and a thermometer was charged with 100 g of α,ω-divinyldimethylsiloxy-terminated dimethylpolysiloxane having a number average molecular weight of 39,900 (corresponding to 0.0051 moles in terms of vinyl groups) and a toluene solution of a platinum-1,3-divinyl-1,1,3,3-tetramethyldisiloxane complex (in an amount of 50 ppm in terms of platinum), and the mixture was heated to 60°C. Then, 2.50 g of the disiloxane compound a (corresponding to 0.03 moles in terms of hydrosilyl groups) was added to the mixture, and the resulting mixture was stirred at 60°C for 2 hours. The reaction was judged complete when the peaks corresponding to the vinyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing organopolysiloxane A-2.

The obtained reactive silicon group-containing organopolysiloxane A-2 was a colorless transparent liquid having a number average molecular weight of 41,500 and a viscosity of 11,000 mPa·s.

### [Example 2-3] Synthesis of reactive silicon group-containing organopolysiloxane A-3

A 200 mL separable flask equipped with a stirrer, a reflux condenser, and a thermometer was charged with 100 g of α,ω-divinyldimethylsiloxy-terminated dimethylpolysiloxane having a number average molecular weight of 13,600 (corresponding to 0.015 moles in terms of vinyl groups) and a toluene solution of a platinum-1,3-divinyl-1,1,3,3-tetramethyldisiloxane complex (in an amount of 50 ppm in terms of platinum), and the mixture was heated to 60°C. Then, 9.00 g of the disiloxane compound b (corresponding to 0.030 moles in terms of hydrosilyl groups) was added to the mixture, and the resulting mixture was stirred at 60°C for 2 hours. The reaction was judged complete when the peaks corresponding to the vinyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing organopolysiloxane A-3.

The obtained reactive silicon group-containing organopolysiloxane A-3 was a colorless transparent liquid having a number average molecular weight of 15,200 and a viscosity of 620 mPa·s.

### [Example 2-4] Synthesis of reactive silicon group-containing organopolysiloxane A-4

A 200 mL separable flask equipped with a stirrer, a reflux condenser, and a thermometer was charged with 100 g of α,ω-divinyldimethylsiloxy-terminated dimethylpolysiloxane having a number average molecular weight of 13,600 (corresponding to 0.015 moles in terms of vinyl groups) and a toluene solution of a platinum-1,3-divinyl-1,1,3,3-tetramethyldisiloxane complex (in an amount of 50 ppm in terms of platinum), and the mixture was heated to 60°C. Then, 9.70 g of the disiloxane compound c (corresponding to 0.030 moles in terms of hydrosilyl groups) was added to the mixture, and the resulting mixture was stirred at 60°C for 2 hours. The reaction was judged complete when the peaks corresponding to the vinyl groups in the raw materials had completely disappeared in ¹H-NMR measurement and the peaks corresponding to the target substance were detected. After completion of the reaction, the solvent was removed by evaporation at 100°C and a degree of vacuum of 1.3 kPa for 3 hours to thereby obtain a reactive silicon group-containing organopolysiloxane A-4.

The obtained reactive silicon group-containing organopolysiloxane A-4 was a colorless transparent liquid having a number average molecular weight of 15,500 and a viscosity of 620 mPa·s.

### [Comparative Example 2-1] Synthesis of reactive silicon group-containing organopolysiloxane A'-5

A 200 mL separable flask equipped with a stirrer, a reflux condenser, and a thermometer was charged with 100 g of α,ω-divinyldimethylsiloxy-terminated dimethylpolysiloxane having a number average molecular weight of 13,600 (corresponding to 0.015 moles in terms of vinyl groups) and a toluene solution of a platinum-1,3-divinyl-1,1,3,3-tetramethyldisiloxane complex (in an amount of 50 ppm in terms of platinum), and the mixture was heated to 60°C. Then, 3.18 g of methyldimethoxysilane (corresponding to 0.030 moles in terms of hydrosilyl groups) was added to the mixture, and the resulting mixture was stirred at 60°C for 2 hours. The reaction was judged complete when the peaks corresponding to the vinyl groups in the raw materials had completely disappeared in ¹H-NMR measurement and the peaks corresponding to the target substance were detected. After completion of the reaction, the solvent was removed by evaporation at 100°C and 1.3 kPa for 3 hours to thereby obtain a reactive silicon group-containing organopolysiloxane A'-5.

The obtained reactive silicon group-containing organopolysiloxane A'-5 was a colorless transparent liquid having a number average molecular weight of 15,500 and a viscosity of 620 mPa·s.

### [Comparative Example 2-2] Synthesis of reactive silicon group-containing organopolysiloxane A'-6

A 200 mL separable flask equipped with a stirrer, a reflux condenser, and a thermometer was charged with 100 g of α,ω-divinyldimethylsiloxy-terminated dimethylpolysiloxane having a number average molecular weight of 13,600 (corresponding to 0.015 moles in terms of vinyl groups) and 2.54 g of mercaptomethyltrimethoxysilane (corresponding to 0.015 moles in terms of mercapto groups), and the mixture was heated to 90°C. Then, 0.1 g of 2,2'-azobis-2-methylbutyronitrile was added to the mixture, and the resulting mixture was stirred at 90°C for 3 hours. The reaction was judged complete when the peaks corresponding to the vinyl groups and the mercapto groups in the raw materials had completely disappeared in ¹H-NMR measurement and the peaks corresponding to the target substance were detected.

The obtained reactive silicon group-containing organopolysiloxane A'-6 was a colorless transparent liquid having a number average molecular weight of 15,900 and a viscosity of 550 mPa·s.

### [Comparative Example 2-3] Synthesis of reactive silicon group-containing organopolysiloxane A'-7

A 200 mL separable flask equipped with a stirrer, a reflux condenser, and a thermometer was charged with 100 g of α,ω-dihydroxy-terminated polypropylene glycol having a number average molecular weight of 7,600 (corresponding to 0.040 moles in terms of hydroxy groups) and 7.1 g of isocyanatomethyltrimethoxysilane (corresponding to 0.040 moles of isocyanato groups), and the mixture was heated to 80°C. Then, 0.1 g of dioctyltin dilaurate was added to the mixture, and the resulting mixture was stirred at 80°C for 3 hours. The reaction was judged complete when the absorption peak corresponding to the isocyanato groups in the raw materials had completely disappeared in IR measurement and the absorption peak corresponding to urethane bonds was detected.

The obtained reactive silicon group-containing organopolysiloxane A'-7 was a light yellow transparent liquid having a number average molecular weight of 8,000 and a viscosity of 3,700 mPa·s.

### [3] Production of compositions and cured coatings

### [Example 3-1]

100 Parts by weight of the reactive silicon group-containing organopolysiloxane A-1 obtained in Example 2-1 and 0.5 parts by weight of a curing catalyst B-1 (2-[3-(trimethoxysilyl)propyl]-1,1,3,3-tetramethylguanidine) were uniformly mixed using a stirrer under moisture-shielded conditions to prepare a composition.

The obtained composition was applied to a glass plate using a bar coater No. 14 in air at 25°C and 50%RH and allowed to dry and cure in air at 25°C and 50%RH for 1 day to produce a cured coating.

### [Examples 3-2 to 3-4 and Comparative Examples 3-1 to 3-3]

A composition and a cured coating were produced using the same procedure as in Example 3-1 except that the reactive silicon group-containing organopolysiloxane A-1 in Example 3-1 was changed to one of the reactive silicon group-containing organopolysiloxanes A-2 to A-4 obtained in Examples 2-2 to 2-4 and the reactive silicon group-containing organopolysiloxanes A'-5 to A'-7 obtained in Comparative Examples 2-1 to 2-3.

### [Example 3-5]

A composition and a cured coating were produced using the same procedure as in Example 3-1 except that the curing catalyst B-1 in Example 3-1 was changed to 5 parts by weight of a curing catalyst B-2 (3-aminopropyltrimethoxysilane).

### [Example 3-6]

A composition and a cured coating were produced using the same procedure as in Example 3-1 except that the curing catalyst B-1 in Example 3-1 was changed to 5 parts by weight of a curing catalyst B-3 (dioctyltin diversatate).

### [Example 3-7]

A composition and a cured coating were produced using the same procedure as in Example 3-1 except that the curing catalyst B-1 in Example 3-1 was changed to 2 parts by weight of a curing catalyst B-4 (titanium diisopropoxy bis(ethylacetoacetate)).

### [Comparative Example 3-4]

A composition and a cured coating were produced using the same procedure as in Comparative Example 3-1 except that the curing catalyst B-1 in Comparative Example 3-1 was changed to 5 parts by weight of the curing catalyst B-2 (3-aminopropyltrimethoxysilane).

### [Comparative Example 3-5]

A composition and a cured coating were produced using the same procedure as in Comparative Example 3-1 except that the curing catalyst B-1 in Comparative Example 3-1 was changed to 5 parts by weight of the curing catalyst B-3 (dioctyltin diversatate).

### [Comparative Example 3-6]

A composition and a cured coating were produced using the same procedure as in Comparative Example 3-2 except that the curing catalyst B-1 in Comparative Example 3-2 was changed to 5 parts by weight of the curing catalyst B-2 (3-aminopropyltrimethoxysilane).

### [Comparative Example 3-7]

A composition and a cured coating were produced using the same procedure as in Comparative Example 3-2 except that the curing catalyst B-1 in Comparative Example 3-2 was changed to 5 parts by weight of the curing catalyst B-3 (dioctyltin diversatate).

The following physical properties of the cured coatings produced above in Examples 3-1 to 3-7 and Comparative Examples 3-1 to 2-7 were evaluated. The results are shown in Tables 1 and 2.

### [Tack-free time]

One of the compositions was applied to a glass plate using the application method described above to obtain a test piece. The test piece was left to stand in air at 25°C and 50%RH to allow moisture curing to proceed, and the time until the coating no longer adhered to a finger pressed against the applied surface was determined. The smaller the determined value, the higher the curability.

### [Yellowing resistance]

A test piece having a cured coating formed on a glass plate using the above-described application method was irradiated with ultraviolet light using a germicidal lamp in air at 25°C and 50%RH for 2 weeks (cumulative irradiation dose: 26,000 mJ/cm³). The degree of yellowing of the resulting cured coating defined as ΔYI (the degree of yellowing = the change in the degree of yellowing YI) was evaluated using a color difference meter based on JIS K 7373. The smaller the determined value, the higher the yellowing resistance.

When ΔYI was less than 0.5, the yellowing resistance was judged to be good and was rated "○." When ΔYI was 0.5 or more, the yellowing resistance was rated "×."

### [Heat resistance]

A test piece having a cured coating formed on a glass plate using the above-described application method was left to stand in a dryer at 150°C for 2 weeks. When no finger mark was left on the coating after the surface of the coating was pressed with a finger, the test piece was rated "○." When a finger mark was left on the coating after the surface of the coating was pressed with a finger, the test piece was rated "×."

**[Table 1]**

| | | Example | | | | | | |
|---|---|---|---|---|---|---|---|---|
| | | 3-1 | 3-2 | 3-3 | 3-4 | 3-5 | 3-6 | 3-7 |
| (A) Reactive silicon group-containing organopolysiloxane | | A-1 | A-2 | A-3 | A-4 | A-1 | A-1 | A-1 |
| (B) Curing catalyst | | B-1 | B-1 | B-1 | B-1 | B-2 | B-3 | B-4 |
| Tack-free time | | 10 min | 20 min | 30 min | 10 min | 20 min | 10 min | 10 min |
| Yellowing resistance | ΔYI | 0.1 | 0.1 | 0.1 | 0.1 | 0.2 | 0.1 | 0.2 |
| | Rating | ○ | ○ | ○ | ○ | ○ | ○ | ○ |
| Heat resistance | | ○ | ○ | ○ | ○ | ○ | ○ | ○ |

**[Table 2]**

| | | Comparative Example | | | | | | |
|---|---|---|---|---|---|---|---|---|
| | | 3-1 | 3-2 | 3-3 | 3-4 | 3-5 | 3-6 | 3-7 |
| (A) Reactive silicon group-containing organopolysiloxane | | A'-5 | A'-6 | A'-7 | A'-5 | A'-5 | A'-6 | A'-6 |
| (B) Curing catalyst | | B-1 | B-1 | B-1 | B-2 | B-3 | B-2 | B-3 |
| Tack-free time | | 1 week | 10 min | 2 hr | Not cured | Not cured | 10 min | 20 min |
| Yellowing resistance | ΔYI | 0.2 | 0.1 | 4.4 | - | - | 0.2 | 0.1 |
| | Rating | ○ | ○ | × | - | - | ○ | ○ |
| Heat resistance | | ○ | × | ○ | - | - | × | × |

As shown in Table 1, the cured coatings produced in Examples 3-1 to 3-7 using the reactive silicon group-containing organopolysiloxanes A-1 to A-4 obtained in Examples 2-1 to 2-4 have good curability, high yellowing resistance, and high heat resistance.

However, as can be seen in Table 2, in Comparative Examples 3-1, 3-4, and 3-5 using the organopolysiloxane A'-5 not having the group represented by structural formula (1) above, the curability is poor. In Comparative Examples 3-2, 3-6, and 3-7 using the organopolysiloxane A'-6 having sulfide-methylene-silicon bonds, the heat resistance is low. In Comparative Example 3-3 using the organopolysiloxane A'-7 having urethane bonds, the yellowing resistance is poor.

## Claims

1. A reactive silicon group-containing organopolysiloxane comprising, per molecule, at least one group represented by the following structural formula (1), the group being bonded to a silicon atom: 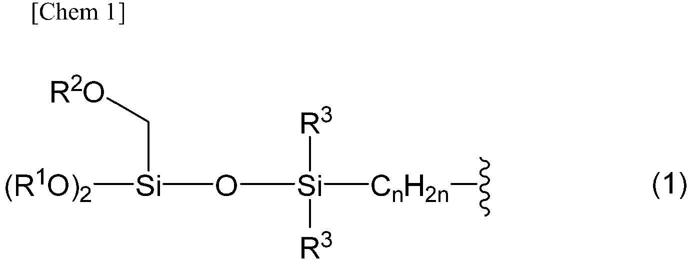 wherein R¹ and R² each independently represent a hydrogen atom, a saturated aliphatic hydrocarbon group having 1 to 10 carbon atoms, or an aryl group having 6 to 10 carbon atoms; each R³ independently represents a saturated aliphatic hydrocarbon group having 1 to 10 carbon atoms or an aryl group having 6 to 10 carbon atoms; n is an integer from 2 to 12; and the wavy line represents a bonding site.

2. The reactive silicon group-containing organopolysiloxane according to claim 1, wherein the reactive silicon group-containing organopolysiloxane is represented by the following formula (2): 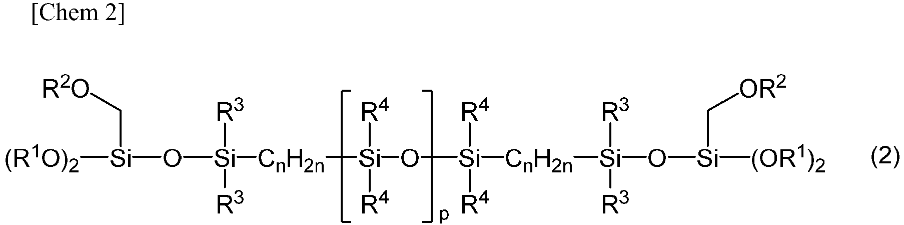 wherein R¹, R², R³ and n have the same meanings as defined above; each R⁴ independently represents a saturated aliphatic hydrocarbon group having 1 to 10 carbon atoms or an aryl group having 6 to 10 carbon atoms; and p is an integer from 1 to 2,000.

3. A disiloxane compound represented by the following formula (3): 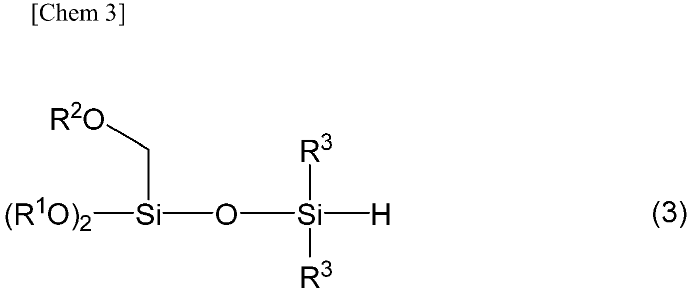 wherein R¹ and R² each independently represent a hydrogen atom, a saturated aliphatic hydrocarbon group having 1 to 10 carbon atoms, or an aryl group having 6 to 10 carbon atoms, and each R³ independently represents a saturated aliphatic hydrocarbon group having 1 to 10 carbon atoms or an aryl group having 6 to 10 carbon atoms.

4. A method for producing the reactive silicon group-containing organopolysiloxane according to claim 1, the method comprising subjecting an organopolysiloxane including an alkenyl group bonded to a silicon atom and a disiloxane compound represented by the following formula (3) to a hydrosilylation reaction: 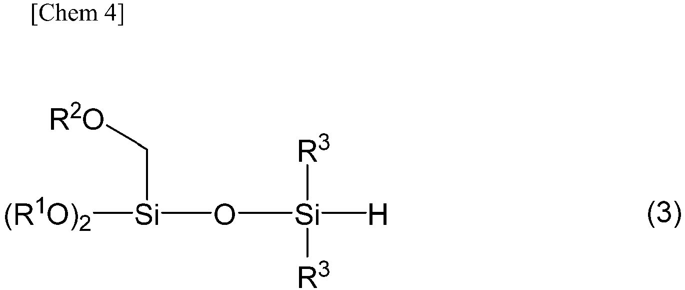 wherein R¹, R², and R³ have the same meanings as defined above.

5. The method for producing the reactive silicon group-containing organopolysiloxane according to claim 4, wherein the organopolysiloxane including an alkenyl group bonded to a silicon atom is represented by the following formula (4): 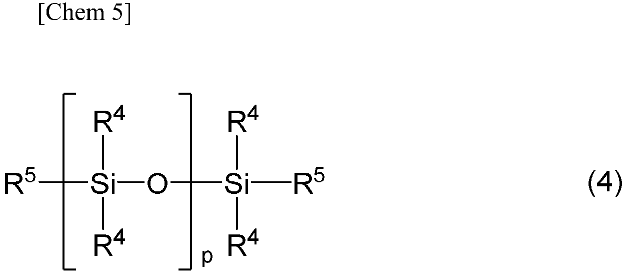 wherein each R⁴ independently represents a saturated aliphatic hydrocarbon group having 1 to 10 carbon atoms or an aryl group having 6 to 10 carbon atoms; each R⁵ represents an alkenyl group having 2 to 12 carbon atoms; and p is an integer from 1 to 2000.

6. A curable composition comprising: (A) the reactive silicon group-containing organopolysiloxane according to claim 1; and (B) a curing catalyst.

7. The curable composition according to claim 6, wherein the curing catalyst (B) is an amine-based compound.

8. A cured product obtained by curing the curable composition according to claim 6 or 7.

9. A coating agent composition comprising: (A) the reactive silicon group-containing organopolysiloxane according to claim 1; and (B) a curing catalyst.

10. The coating agent composition according to claim 9, wherein the curing catalyst (B) is an amine-based compound.

11. An article comprising a coating layer formed by curing the coating agent composition according to claim 9 or 10.

12. An adhesive composition comprising: (A) the reactive silicon group-containing organopolysiloxane according to claim 1; and (B) a curing catalyst.

13. The adhesive composition according to claim 12, wherein the curing catalyst (B) is an amine-based compound.

14. An article comprising a bonding layer formed by curing the adhesive composition according to claim 12 or 13.
